# EUROPÄISCHE PATENTSCHRIFT

(11) **EP 1 496 143 B1**
(45) Veröffentlichungstag und Bekanntmachung des Hinweises auf die Patenterteilung: **12.03.2014**
(21) Anmeldenummer: 04103107.1
(22) Anmeldetag: 01.07.2004
(51) Int. Cl.: D01H 1/22, D01G 19/26

(54) **Textilmaschine, insbesondere Spinnereivorbereitungsmaschine mit einem Streckwerk**
Textile machine, particularly a preparation machine for spinning, with a drawing frame
Machine textile, particulièrement une machine préparatoire pour la filature, comprenant un banc d'étirage

(30) Priorität: 08.07.2003 DE 10330950
(43) Veröffentlichungstag der Anmeldung: 12.01.2005
(73) Patentinhaber: Rieter Ingolstadt GmbH, 85055 Ingolstadt (DE)
(72) Erfinder: Brunner, Armin, 84094 Elsendorf (DE)
(74) Vertreter: Schlief, Thomas P.

(56) Entgegenhaltungen:
- EP-A- 0 450 043
- EP-A- 0 730 052
- DE-A1- 19 801 253
- GB-A- 1 327 532

## Beschreibung

Die Erfindung betrifft eine Textilmaschine, insbesondere Spinnereivorbereitungsmaschine mit einem Streckwerk, mit mehreren Triebscheiben zum Antreiben von Maschinenelementen, insbesondere Streckwerkswalzen, und mindestens einem, jeweils mindestens zwei Triebscheiben umschlingenden endlosen Riemen.

Derartige Textilmaschinen sind vielfältig bekannt. Bei der Strecke RSB-D 35 der Firma Rieter sind drei Walzenpaare vorgesehen, welche eine vom Streckwerkseingang zum Streckwerksausgang gesteigerte Umfangsgeschwindigkeit aufweisen. Die jeweilige Unterwalze der Streckwerkswalzen wird zur Erzeugung eines möglichst schlupffreien Antriebs, welcher für einen ordnungsgemäßen Verzug der Faserbänder erforderlich ist, mittels Flachriemen angetrieben. Die Oberwalzen werden gegen die Unterwalzen gepreßt und klemmen hierdurch das zwischen ihnen durchlaufende Fasermaterial.

Eine weitere derartige Strecke ist aus der WO 91/05893 bekannt.

Es hat sich herausgestellt, daß die Flachriemen zwar viele Vorteile gegenüber den früheren und teilweise auch noch häufig eingesetzten Zahnriemen aufweisen, daß aber wegen der relativ hohen Elastizität des Flachriemens ein unerwünschter Dehnschlupf resultieren kann. Diese Federwirkung des Flachriemens tritt insbesondere bei dynamischer Drehzahlveränderung auf, so daß Fehler im Übertragungsverhalten resultieren. Bei irreversibler Dehnung und dem dadurch hervorgerufenen Gleitschlupf muß zudem eine Nachjustierung vorgenommen werden. Zahnriemen, die zudem relativ einfach handhabbar sind, weisen demgegenüber weniger Neigung zum Schlupf auf, haben jedoch den Nachteil, daß sie bei Verschmutzungen unruhig laufen. Zudem weisen Zahnriemen den sog. Polygon-Effekt auf, bei dem es zu Schlägen aufgrund des Einfaltens der Zähne in die Zahnlücken kommt. Ein weiterer Nachteil ist, daß keine stufenlose Übersetzungsänderung mit Zahnriemen möglich ist.

Es ist Aufgabe der vorliegenden Erfindung, einen verbesserten Antrieb der Triebscheiben bei einer Textilmaschine zu realisieren.

Diese Aufgabe wird durch die Merkmale des kennzeichnenden Teils des Anspruchs 1 gelöst.

Mittels des Einsatzes eines mit Rippen und Rillen längsprofilierten Riemens ergeben sich mehrere Vorteile. Ein Vorteil besteht darin, daß der Riemen aufgrund seiner Rippen-Rillen-Struktur in Längsrichtung gegenüber einem Flachriemen genauer geführt ist. Mittels der mindestens zwei Längsrippen ist immer ein zentrischer Riemenlauf garantiert. Daher ist der Einsatz eines solchen Riemens auch bei nicht absolut parallelen Achsen möglich. Im Vergleich zu einem Zahnriemen mit seinen Querrillen treten bei Verschmutzungen zudem keine periodischen Fehler auf. Auch stört kein Polygon-Effekt wie beim Zahnriemen den ruhigen Lauf. Es ist auch deshalb eine höhere Dynamik mit besseren Übertragungseigenschaften mittels des die Längsrippen-Rillen-Struktur aufweisenden Riemens erzielbar.

Insgesamt läßt sich gegenüber Zahnriemen ein sehr ruhiger, nahezu schwingungsfreier Lauf realisieren. Des weiteren ist die Steifigkeit eines derartigen Riemens bzw. sein Elastizitätsmodul höher als bei einem Flachriemen, so daß ein genaueres Übertragungsverhalten resultiert, insbesondere bei dynamischen Drehzahländerungen. Mit dem erfindungsgemäßen Riemen kann somit bei derartigen Drehzahländerungen ein günstigeres dynamisches Verhalten erzielt werden.

Des weiteren ist eine stufenlose Übersetzungsänderung mittels des Einsatzes des genannten Riemens möglich, was insbesondere Zahnriemen einen gravierenden Nachteil beschert.

Auch sind mit dem Antrieb größere Übersetzungsverhältnisse und größere Riemengeschwindigkeiten gegenüber den bisher eingesetzten Riemen realisierbar, beispielsweise Riemengeschwindigkeiten von 60 m/s. Da sich die Kontaktfläche durch die Längsprofilierung gegenüber einem Flachriemen bei gleicher Riemenbreite erhöht, lassen sich somit insgesamt größere Leistungen übertragen. Auf diese Weise sind sehr hohe Geschwindigkeiten der Triebscheiben und damit insbesondere der Streckwerkswalzen erzielbar, so daß Faserband-Liefergeschwindigkeiten von deutlich mehr als 1000 m/min bei hoher Präzision des verzogenen Faserbandes möglich sind.

Ein weiterer Vorteil gegenüber herkömmlichen Zahnriemen ist dadurch gegeben, daß mittels des Einsatzes von Riemen mit Rippen-Rillen-Struktur in Längsrichtung gekreuzte bzw. abgewinkelte Riementriebe ermöglicht werden, bei denen die Achsen zweier umschlungener Triebscheiben nicht parallel bzw. 90° zueinander verlaufen. Somit erhöht sich der Gestaltungsspielraum bei der Konstruktion der Maschine beträchtlich.

Nicht zuletzt sind die in Umfangsrichtung verlaufenden Rillen der Triebscheiben relativ einfach mittels Drehen unter Verwendung eines Formmeißels mit jedem beliebigen Durchmesser herstellbar, was den zusätzlichen Vorteil ergibt, daß keine Abstufung mit fester Zähnezahl (wie bei einem Zahnriemen) erforderlich ist. Die Vertiefungen der Triebscheiben für Zahnriemen müssen dagegen umständlich gefräst oder gestoßen werden.

Der Rippenriemen weist besonders bevorzugt mehr als zwei parallel zueinander verlaufende Längsrippen auf. Die Vielzahl von Rippen mit dazwischen angeordneten Längsrillen sorgen einerseits für eine gleichmäßige Kraftverteilung über die gesamte Riemenbreite und gewährleisten andererseits einen besonders guten Kraftschluß.

Es hat sich herausgestellt, daß die mindestens zwei Längsrippen in einer vorteilhaften Ausführungsform keilförmig ausgebildet ist. Es resultiert somit ein aus anderen Einsatzgebieten bekannter Keilrippenriemen, der eine außerordentlich hohe Flexibilität aufweist, so daß auch mit sehr kleinen Triebscheiben große Übersetzungsverhältnisse (beispielsweise 1:40) realisiert werden können. Auch lassen sich mit einem solchen Riemen hohe Gegenbiegungen verwirklichen, so daß ein vielfältiger Einsatz mit geringem Platzaufwand möglich ist.

Die den Rippen und Rillen gegenüberliegende Seite des Riemens kann verschiedenartig ausgebildet sein. In einer Variante ist diese Seite flach ausgebildet, so daß bei Umlenkung des Riemens diese flache Seite auf einer Triebscheibe läuft. Diese Triebscheibe kann entweder die genannte Rippen-Rillen-Profillerung in Längsrichtung oder eine glatte Oberfläche oder sogar ein Zahnprofil aufweisen.

Alternativ weist der Riemen auf seiner den Längsrippen abgewandten Seite ebenfalls ein Profil auf, beispielsweise eines mit ebenfalls mindestens zwei Längsrippen oder ein solches mit Querrippen, d.h. einem Zahnprofil. Im erst genannten Fall einer Doppelprofilierung mit Längsrippen sind Vorder- und Rückseite des Riemens erfindungsgemäß verwendbar, was insbesondere bei Drehrichtungsunterschieden zweier Wellen von Vorteil ist.

Sowohl im Falle einer nur einseitigen als auch zweiseitigen Profilierung kann durch beidseitige Umlenkung, geeignete Umschlingungswinkel sowie unterschiedliche Biegung ein Säuberungseffekt des Riemens erreicht werden, so daß der Schmutz aus den Rillen fallen kann und sich nicht auf den Oberflächen der Triebscheiben ablagert.

Zur Reinigung der Rillen der Riemen und/oder der Triebscheiben können Reinigungseinrichtungen eingesetzt werden, beispielsweise fest angeordnete Abstreifbürsten oder Düsen mit Blasimpuls.

Besonders bevorzugt werden mittels des Rippen- bzw. Keilrippenriemens mehrere Abtriebsscheiben von einer Antriebsscheibe gleichzeitig angetrieben. Diese Möglichkeit ergibt sich daraus, daß im Vergleich zu Flachriemen höhere Leistungen übertragen werden können. Es sind somit auf einem Riemenstrang eine Antriebswelle und mehrere Abtriebswellen anordenbar. Die im Stand der Technik benötigten Zwischenwellen können entfallen. Die Anzahl der Riemen und insbesondere der Wellen und Lager lassen sich somit im Vergleich zu den bekannten, vergleichbaren Textilmaschinen reduzieren, wodurch nicht zuletzt Kosten gesenkt werden können. Auch resultieren insgesamt kleinere anzutreibende Massen, so daß die Massenträgheiten ebenfalls kleiner sind und damit eine höhere Maschinendynamik erzielt werden kann. Zudem muß lediglich der eine Riemen entspannt werden, wenn mehrere Wechselräder an diesem Riemenstrang ausgetauscht werden sollen, z.B. zum Einstellen einer anderen Bandfeinheit des verzogenen Materials oder zum Anpassen der Maschine auf verschiedene Textilmaterialien. Bisher muß zum Austauschen eines jeden Wechselrades der zugehörige Riemen entspannt werden.

Enfindungsgemäß weist die Textilmaschine eine Einrichtung auf, mittels welcher der mindestens eine Riemen mit einer unabhängig von seiner Länge und dem Durchmesser der mindestens einen umschlungenen Triebscheibe auf eine in allen Fällen im wesentlich gleich große Riemenspannung einstellbar ist. Bei den herkömmlichen Zahnriemenantrieben wird die Riemenspannung vom Bediener nach eigenem Ermessen oder mit Hilfe eines entsprechenden Meßgerätes auf einen zunächst festen Wert eingestellt. Bei bekannten Flachriemen kann deren Sollspannung mit Hilfe einer an einem Spannhebel angeordneten Klemmschraube fixiert werden. An dem federbeaufschlagten Spannhebel ist eine Spann- bzw. Umlenkrolle für den Flachriemen angeordnet. Durch Fixierung der Klemmschraube wird somit auch die Spannrolle an ihrem Platz gehalten. Dehnt sich der Flach- oder der zuvor genannte Zahnriemen unelastisch, verringert sich die Riemenspannung, so daß diese vom Bediener nachgestellt werden muß. Bei Austausch der Triebscheibe gegen eine Triebscheibe mit anderem Umfang ist ggf. eine andere Feder zu verwenden.

Der genannte Erfindungsaspekt geht hingegen davon aus, daß die Riemenspannung sich auf einen in allen Fällen im wesentlichen gleich großen Wert einstellt, ohne daß der Bediener die Riemenspannung mit Krafteinsatz o.ä. aktiv verstellt, so daß der Wartungs- und Austauschaufwand reduziert wird. Unabhängig von der Triebscheibengröße oder der Länge des verwendeten Riemens kann sich die Riemenspannung hierbei auf den vorbestimmten Wert einstellen. Messungen der Riemenspannung sowie ein undeutliches Verlassen auf Erfahrungswerte sind hinfällig.

Zu diesem Zweck umfaßt die Einrichtung zum Riemenspannen besonders bevorzugt mindestens eine beweglich gelagerte Spannrolle oder Umlenkrolle, welche kraftbeaufschlagt ist und somit den Riemen entsprechend auf die vorbestimmte Kraft spannt, ohne daß der Bediener eingreifen muß. Die Spannrolle ist hierzu beispielsweise in einem linear geführten Schlitten gelagert, auf welchen die von der Einrichtung aufzubringende Kraft wirkt. Somit kann auch bei unterschiedlichen Wechselraddurchmessern oder bei Einstellung anderer Streckfeldweiten eine vorbestimmte Riemenspannung realisiert werden.

Die Riemenspannung stellt sich bei unterschiedlichen Durchmessern von Wechseltriebscheiben bzw. bei verschieden langen Riemen durch Verlagerung der Spannrolle jeweils auf einen konstanten Wert ein, wenn der Umschlingungswinkel α (Eingriffswinkel) des Riemens um die Spannrolle gemäß einer bevorzugten Ausführungsform ca. 180° beträgt. Bei Abweichen von dieser Winkelzahl nimmt die Riemenspannung für Wechselräder unterschiedlichen Durchmessers unterschiedliche Werte an; je nach Einsatzgebiet kann dies aber durchaus im tolerierbaren Bereich liegen. So ist es möglich, daß der Umschlingungswinkel a im Bereich zwischen ca. 170° und 190° oder auch im Bereich zwischen 160° und 200° liegt.

Die genannte Spannrolle wird bevorzugt direkt oder indirekt mit einer Federkraft beaufschlagt, wobei die Federkraft von einer Gasfeder aufgebracht wird. Eine Gasfeder hat insbesondere den Vorteil, daß die Kraft-Weg-Kennlinie annähernd waagerecht verläuft, so daß bei dem genannten Umschlingungswinkel a von ca. 180° eine konstante Riemenspannung auch bei unterschiedlichen Auslenkungen der Spannrolle aufgrund beispielsweise von Riemendehnung oder nach Auswechseln von Triebscheiben mit unterschiedlichem Durchmesser einstellbar ist.

Ist die Gasfeder des weiteren vorteilhafterweise mit einer Dämpfung versehen, können Schwingungen des mindestens einen Riemens während des Maschinenbetriebs weitgehend verhindert werden.

Bel einer alternativen, vorteilhaften Ausgestaltung kann die Spannrolle mittels einer Feststelleinrichtung an ihrer Position fixiert werden, um auch hier Schwingungen im Betrieb zu vermeiden. Die Feststelleinrichtung, beispielsweise eine Klemmschraube, kann hierzu gemäß einer Ausführungsform auf den oben genannten Schlitten wirken und diesen in seiner Position fixieren. Durch Lösen der Feststelleinrichtung wird der Riemen aufgrund der dann wirkenden Kraftbeaufschlagung auf die vorbestimmte Spannung gebracht, so daß anschließend nur noch die Feststelleinrichtung wieder aktiviert werden muß. Der Bediener muß also nicht selbst den Riemen nachspannen. Bei einem Wechsel einer Triebscheibe gegen eine solche mit unterschiedlichem Durchmesser ermöglicht die Umschlingung der Spannrolle mit einem Umschlingungswinkel von ca. 180° somit ein schnelles und - bis auf das Lösen und Wiederfeststellen der Feststelleinrichtung - automatisches Riemenspannen.

Alternativ kann die Riemenspannung auch ständig kontinuierlich, d.h. ohne Ortsfixierung der Spannrolle, während des Maschinenbetriebs gespannt werden. Ein Beispiel hierfür ist die oben genannte Gasfeder mit Dämpfung. Somit wird ein ständiger Ausgleich der Riemenlängstoleranz realisiert. Auch erhöht sich die Lebensdauer des Riemens durch die fortwährende Einstellung der optimalen Spannung. Bei dieser Ausführung ist somit keine Feststelleinrichtung notwendig.

Vorteilhafte Weiterbildungen der Erfindung sind durch die Merkmale der Unteransprüche gekennzeichnet.

Im folgenden wird die Erfindung anhand der Figuren näher erläutert. Es zeigen:
- Figur 1: einen Getriebeplan einer Strecke;
- Figur 2: eine Triebscheibe mit einem Keilrippenriemen im Schnitt;
- Figur 3: einen gebogenen Ausschnitt eines Keilrippenriemens im Querschnitt;
- Figur 4: einen Riemen mit jeweils einem Keilrippenprofil auf beiden Laufflächenseiten im Querschnitt;
- Figur 5: einen Riemen mit einem Keilrippenprofil auf der einen und einem Zahnprofil auf der anderen Laufflächenseite im Querschnitt, und
- Figur 6: eine schematische Darstellung einer Einrichtung zum Riemenspannen.

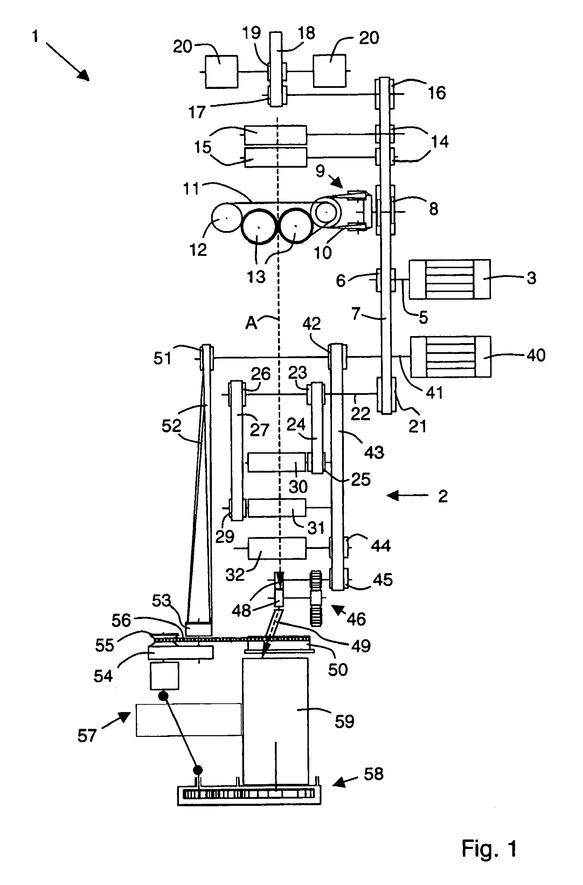

In der Figur 1 ist ein Getriebeplan einer Strecke 1 mit einem Streckwerk 2 dargestellt. Angetrieben werden die verschiedenen Elemente der Strecke 1 durch zwei Motoren 3, 40. Der erste Motor 3 ist zum Antrieb von dem Streckwerk 2 vorgelagerten Elementen sowie zwei vorderer Streckwerkswalzen vorgesehen, während der zweite Motor 40 die letzte Streckwerkswalze sowie dem Streckwerk 2 nachgeordnete Elemente antreibt. Zur Leistungsübertragung von den Antriebsscheiben auf die Abtriebsscheiben werden erfindungsgemäß zumindest teilweise Riemen mit mindestens zwei Längsrippen auf einer Laufseite verwendet.

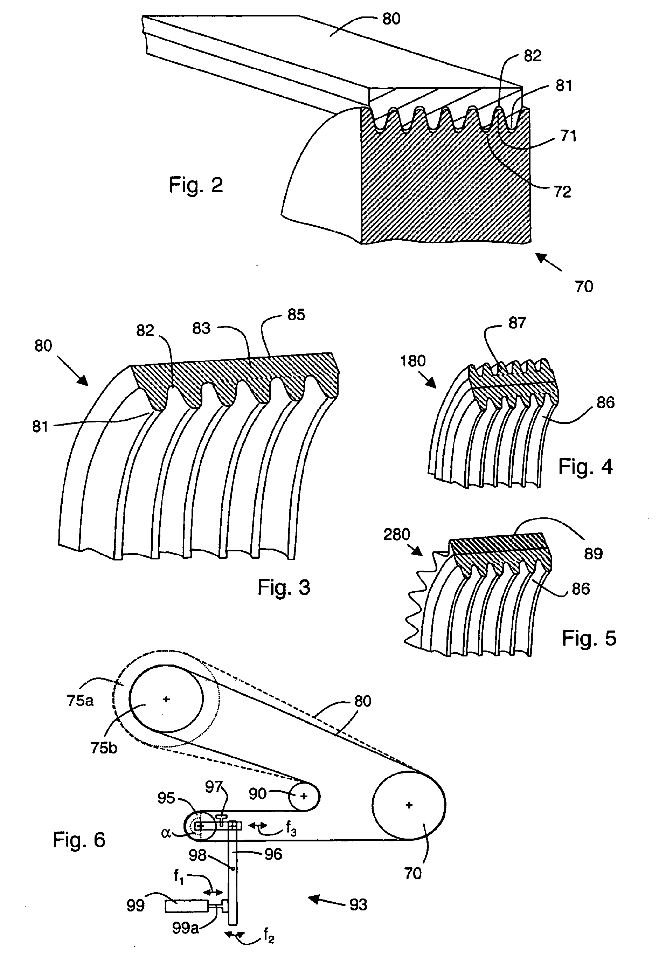

Im folgenden wird der Getriebeplan der Figur 1 näher erläutert. Der erste Motor 3 treibt über eine Antriebswelle 5 eine Antriebsscheibe 6 an, welche eine Rippen-Rillen-Struktur in Umfangsrichtung aufweist (s. Figur 2). Über die Antriebsscheibe 6 ist ein Keilrippenriemen 7 gespannt, der vier, dem Streckwerk 2 vorgelagerte Abtriebsscheiben 8, 14, 16, 21 antreibt. Die Abtriebsscheibe 14 treibt ihrerseits über eine Welle eine Abtriebsscheibe 17 an, welche wiederum über einen Riemen 18 eine Abtriebsscheibe 19 in Drehung versetzt. Diese Abtriebsscheibe 19 treibt zu ihren beiden Seiten angeordnete Förderwalzen 20 zum Abzug von Faserbändern aus nicht näher dargestellten Vorlagekannen an. Es ist hierbei nur der Abzug von zwei Faserbändem aus den dem Streckwerk 2 nächstgelegenen Kannen dargestellt; üblicherweise werden sechs oder acht Faserbänder aus einer entsprechenden Anzahl von paarweise hintereinander aufgestellten Vorlagekannen abgezogen.

Die beiden Abtriebsscheiben 14 treiben zwei gleichläufige Förderwalzen 15 an (auf denen bekanntermaßen eine Jockeywalze abrollt), welche die mittlerweile zusammengeführten Faserbänder zum Streckwerk 2 fördern.

Die nachfolgende Abtriebsscheibe 8 ihrerseits treibt einen Umlenktrieb 9 an, wobei der entsprechend umgelenkte Riemen 10 mit Hilfe einer Triebscheibe 12 und einem Riemen 11 die zwei gegenläufigen Scheiben 13 eines bekannten Nut-Tastenwalzenpaares antreibt, mit dessen Hilfe die Faserbandquerschnittsschwankungen zur Ausregulierung im Streckwerk 2 ermittelt werden.

Die letzte vom Riemen 7 angetriebene Abtriebsscheibe 21 ist über eine Welle 22 mit zwei Abtriebsscheiben 23, 26 verbunden, wobei die eine mit Hilfe eines Riemens 24 und einer weiteren Abtriebsscheibe 25 die Eingangsunterwalze 30 und die andere mit Hilfe eines anderen Riemens 27 und einer anderen Abtriebsscheibe 29 die Mittelunterwalze 31 antreibt. Die nicht dargestellten jeweiligen Oberwalzen werden in Drehung versetzt, indem sie an die Unterwalzen 30, 31 gedrückt werden.

Der zweite Motor 40 ist über eine Antriebswelle 41 mit zwei Antriebsscheiben 42, 51 verbunden, von denen die erstere über einen Riemen 43 einerseits mit einer Abtriebsscheibe 44 zum Antrieb der Ausgangsunterwalze 32 und andererseits mit einer Abtriebsscheibe 45 und mit Hilfe eines bekannten Übertriebs 46 (hier mit einem Zahnriemen angetrieben) zwei Kalanderwalzen 48 gegenläufig in Drehung versetzt. Das vom Ausgangswalzenpaar abgegebene Faserband (gestrichelt dargestellt) mit der Laufrichtung A wird von den Kalanderwalzen 48 in einen Bandkanal 49, der in einem rotierenden Drehteller 50 angeordnet ist, gefördert und von diesem in eine sich drehende Kanne 59 abgelegt. Die Kalanderwalzen 48 sowie der Kannenstock samt Kanne 59 ist in dem Getriebeplan der Figur 1 um 90° gegenüber dem Streckwerk gekippt dargestellt.

Der Drehteller 50 wird letztendlich über die andere mit der Welle 41 verbundene Antriebsscheibe 51 angetrieben. Hierzu ist um die Antriebsscheibe 51 ein Riemen 52 geschlungen, der seinerseits eine Abtriebsscheibe 53 und eine damit gekoppelte Abtriebsscheibe 54 antreibt. Die letztere ist mit fest mit einer Abtriebsscheibe 55 verbunden, welche mittels eines Riemens 56 den Drehteller antreibt. Über die Abtriebsscheibe 54 wird der Kannenteller 58 mittels des Antriebs 57 angetrieben, um die Kanne 59 wahlweise während des Befüllvorgangs in Drehung zu versetzen.

In Figur 2 ist eine geschnittene Triebscheibe 70 im Ausschnitt dargestellt, welche auf ihrer Umfangsfläche In Umfangsrichtung verlaufende Rippen 71 und Rillen 72 aufweist In die Scheibenrillen 72 greifen Riemenrippen 81 elnes Keilrippenriemens 80 ein, während die Scheibenrillen 71 in die Riemenrillen 82 eingreifen. Zwischen den jeweiligen Rippen und Rillen ist ein Zwischenraum, so daß sich die Rippen und Rillen im wesentlichen an ihren steilen Flanken kraftschlüssig berühren.

In Figur 3 ist der Keilrippenriemen 80 in leicht gebogener Form im Querschnitt dargestellt. Es ist insbesondere zu erkennen, daß die Rippen 81 von einem Riemenrücken 83 abgehen. Die der Rippenstruktur abgewandte Lauffläche ist ebenflächig ausgebildet. Die flache Laufseite kann nicht nur eine Triebscheibe mit ebenfalls glatter Umfangsfläche antreiben, sondern beispielsweise auch eine Treibscheibe, welche wie die Triebscheibe 70 eine Rippen-Rillen-Struktur in Umfangsrichtung aufweist.

Einige oder alle Riemen 7, 18, 24, 27, 43, 52 gemäß der Figur 1 sind als Keilrippenriemen ausgebildet, wobei die entsprechend umschlungenen Triebscheiben bevorzugt ebenfalls eine entsprechende Rillen-Rippen-Profilierung in Längsrichtung aufweisen.

In der Figur 4 ist eine weitere Ausführungsform eines Riemens 180 mit jeweils einer Längsrippenstruktur 86, 87 auf beiden Laufflächenseiten dargestellt. Beide Seiten dieses Riemens 180 können daher zum optimalen An- bzw. Abtreiben entsprechend ausgestalteter Triebscheiben mit Rippen und Rillen in Umfangsrichtung herangezogen werden.

Der Riemen 280 gemäß der Figur 5 weist auf der einen Laufflächenseite eine Längsrippen-Rillen-Struktur 86 und auf der anderen Laufflächenseite ein Zahnprofil 89 auf, so daß dieser Riemen 280 in Maschinen einsetzbar ist, die sowohl Triebscheiben mit in Umfangsrichtung verlaufenden Rippen und Rillen als auch Triebscheiben mit Zahnprofil besitzen.

In Figur 6 ist ein Keilrippenriemen 80 dargestellt, der um eine Antriebsscheibe 70 und eine Abtriebsscheibe 75a bzw. 75b geschlungen ist. Zum Spannen des Riemens 80 ist eine spezielle Einrichtung 93 vorgesehen. Hierbei wird der Riemen 80 von einer Umlenkscheibe 90 zu einer Spannrolle 95 geführt, wobei der Riemen 80 die Spannrolle 95 mit einem Umschlingungswinkel a von ca. 180° umschlingt. Die Spannrolle 95 ist des weiteren mit einem um eine Drehachse 98 gelagerten Spannhebel 96 verbunden, wobei die Schwenkrichtung des Spannhebels 96 mit f₂ bezeichnet ist. Der Spannhebel 96 wird von einer Gasfeder 99 mit einem in Richtung f₁ verschiebbaren Stempel 99a mit einer konstanten Kraft beaufschlagt, so daß auch die Spannrolle 95, die in diesem Ausführungsbeispiel in einem Schlitten 94 linear (s. Pfeil f₃) geführt ist, mit einer konstanten Kraft beaufschlagt wird. Es resultiert somit eine stets konstante Spannung des Keilrippenriemens 80 als Ergebnis der 180°-Umschlingung sowie Verwendung der Gasfeder 99. Auch für den Fall einer irreversiblen Dehnung des Riemens 80 wird dieser stets auf der durch die Gasfeder 99 vorbestimmten Spannung gehalten.

Um ggf. Schwingungen im Betrieb zu vermeiden, kann der Schlitten 94 (oder auch der Spannhebel 96) mit einer Klemmschraube 97 oder einer anderen Feststelleinrichtung festgeklemmt werden, so daß die Spannrolle 95 nur zur Kontrolle der Spannkraft oder zum Nachspannen durch die Gasfeder 99 kraftbeaufschlagt wird. Hierzu wird die Klemmschraube 97 gelöst, so daß sich die Riemenspannung automatisch nachstellen kann, und anschließend wird die Klemmschraube 97 wieder angezogen.

Wird eine der Abtriebsscheiben 75a, 75b gegen die andere ausgetauscht, wird zunächst die Riemenspannung durch Verschwenken des Spannhebels 96 reduziert. Bei Verwendung der Klemmschraube 97 wird auch diese gelöst. Nach Zurückschwenken des Spannhebels 96 stellt sich aufgrund der Kraftbeaufschlagung durch die Gasfeder 99 dann automatisch die gleiche Riemenspannung für die neue Abtriebsscheibe 75a bzw. 75 ein wie für die ausgewechselte Abtriebsscheibe 75b bzw. 75a. Anschließend kann die Klemmschraube wieder angezogen werden. Ein sonstiges manuelles Eingreifen des Bedieners ist nicht notwendig.

Bei einer weiteren, noch einfacher ausgestalteten Ausführungsform ist die Klemmschraube 97 nicht vorhanden. Statt dessen ist die Gasfeder 99 gedämpft ausgebildet, um Schwingungen des Riemens 80 im Betrieb zu vermeiden. Der Aufbau ist ansonsten zu dem in Figur 4 dargestellten gleich.

Der Umschlingungswinkel a von 180° muß nicht unbedingt eingehalten werden, wenn ein gewisser Fehler in Kauf genommen werden kann, ohne daß dies zu einem merklichen oder bedeutendem Qualitätsverlust des resultierenden Bandes führt. Die Riemenspannung ist bei einem von 180° abweichenden Winkel a beim Einsatz der Abtriebsscheibe 75a von derjenigen beim Einsatz der Abtriebsscheibe 75b verschieden. Der Umschlingungwinkel α kann beispielsweise zwischen ca. 160° und 200° liegen. Es hat sich in praktischen Versuchen beispielsweise herausgestellt, daß ein Umschlingungswinkel von 170° noch gute Ergebnisse zeigt.

Die vorliegende Erfindung ist nicht auf die dargestellten und beschriebenen Ausführungsbeispiele beschränkt. Abwandlungen im Rahmen der Patentansprüche sind ohne weiteres möglich. So können auch andere Längsrippenprofile als die gezeigten Keilrippen Einsatz finden.

## Patentansprüche

1. Textilmaschine, insbesondere Spinnereivorbereitungsmaschine mit einem Streckwerk (2), mit mehreren Triebscheiben (6, 8, 12, 14, 16, 17, 19, 21, 23, 25, 26, 19, 42, 44, 45, 51, 53; 70, 75a, 75b) zum Antreiben von Maschinenelementen, insbesondere Streckwerkswalzen (30, 31, 32), mindestens einem, jeweils mindestens zwei Triebscheiben umschlingenden endlosen Riemen (7, 18, 24, 27, 43, 52; 80; 180; 280), und einer Einrichtung (93) zum Einstellen der Spannung des mindestens einen Riemens (80), wobei die Einrichtung (93) eine beweglich gelagerte Spannrolle (95) umfasst, die von dem mindestens einen Riemen (80) umschlungen ist und mittels Beaufschlagung durch Federkraft ortsbeweglich ausgebildet ist, **dadurch gekennzeichnet, dass** der Riemen (7, 18, 24, 27, 43, 52; 80; 180; 280) auf einer Seite mindestens zwei Längsrippen (81) aufweist, welche in korrespondierenden umfangseitigen und in Umfangsrichtung verlaufenden Längsrillen (72) mindestens einer Triebscheibe (6, 8, 12, 14, 16, 17, 19, 21, 23, 25, 26, 19, 42, 44, 45, 51, 53; 70, 75a, 75b) aufgenommen sind, und dass sich die Spannung des mindestens einen Riemens (80) mittels der Einrichtung (93) unabhängig von seiner Länge und dem Durchmesser der mindestens einen umschlungenen Triebscheibe (75a, 75b) auf einen in allen Fällen im wesentlichen gleich großen Wert einstellt, wobei die Federkraft von einer Gasfeder (99) aufgebracht wird.

2. Textilmaschine nach Anspruch 1, **dadurch gekennzeichnet, dass** die Längsrippen (81) des Riemens (7, 18, 24, 27, 43, 52; 80; 180; 280) keilförmig ausgebildet sind (Keilrippenriemen).

3. Textilmaschine nach Anspruch 1 oder 2, **dadurch gekennzeichnet, daß** der Riemen (7, 18, 24, 27, 43, 52; 80) auf der den Längsrippen (81) abgewandten Seite flach ausgebildet ist.

4. Textilmaschine nach Anspruch 1 oder 2, **dadurch gekennzeichnet, dass** der Riemen (7, 18, 24, 27, 43, 52; 80; 180; 280) auf der den Längsrippen (81) abgewandten Seite ein Profil aufweist.

5. Textilmaschine nach Anspruch 4, **dadurch gekennzeichnet, dass** das Profil ebenfalls mindestens zwei Längsrippen aufweist.

6. Textilmaschine nach Anspruch 4, **dadurch gekennzeichnet, dass** das Profil als Zahnprofil ausgebildet ist.

7. Textilmaschine nach einem der vorhergehenden Ansprüche, **dadurch gekennzeichnet, dass** der mindestens eine Riemen (7, 18, 24, 27, 43, 52; 80; 180; 280) eine als Antriebsscheibe (6; 42) ausgebildete Triebscheibe und mehrere als Abtriebsscheiben (8, 14, 16, 17, 21; 44, 45) ausgebildete Triebscheiben umschlingt.

8. Textilmaschine nach einem der vorstehenden Ansprüche, **dadurch gekennzeichnet, dass** der mindestens eine Riemen (80) die Spannrolle (95) mit einem Umschlingungswinkel (α) umschlingt, der im Bereich von ca. 160° - 200° liegt.

9. Textilmaschine nach Anspruch 8, **dadurch gekennzeichnet, dass** der mindestens eine Riemen (80) die Spannrolle (95) mit einem Umschlingungswinkel (α) umschlingt, der im Bereich von ca. 170° - 190° liegt.

10. Textilmaschine nach Anspruch 8, **dadurch gekennzeichnet, dass** der mindestens eine Riemen (80) die Spannrolle (95) mit einem Umschlingungswinkel (a) von ca. 180° umschlingt.

11. Textilmaschine nach einem der vorstehenden Ansprüche, **dadurch gekennzeichnet, dass** die Spannrolle (95) in einem linear geführten Schlitten (94) gelagert ist und dass der Schlitten (94) mit der Federkraft beaufschlagt ist.

12. Textilmaschine nach einem der vorstehenden Ansprüche, **dadurch gekennzeichnet, dass** die Gasfeder (99) derart gedämpft ausgebildet ist, dass Schwingungen des Riemens (80) während des Maschinenbetriebs gedämpft bzw. vermieden werden.

13. Textilmaschine nach einem der einem der vorstehenden Ansprüche, **dadurch gekennzeichnet, dass** die Einrichtung (93) eine Feststelleinrichtung (97) umfaßt, mittels derer die Spannrolle (95) ortsfeststellbar ist.

## Claims

1. A textile machine especially a spinning preparation machine with a drafting device (2), with several drive disks (6, 8, 12, 14, 16, 17, 19, 21, 23, 25, 26, 29, 42, 44, 45, 51, 53; 70, 75a, 75b) for driving machine elements, especially drafting device rollers (30, 31, 32), at least one endless belt (7, 18, 24, 27, 43, 52; 80; 180; 280) surrounding at least two drive disks, and a device (93) for adjusting the tension of the at least one belt (80) the device (93) comprising a movably supported tensioning roller (95) that is looped around by the at least one belt (80) and is designed to be movable by being loaded by spring power, **characterized in that** the belt (7, 18, 24, 27, 43, 52; 80; 180; 280) comprises at least two longitudinal ribs (81) on one side that are received in corresponding longitudinal grooves (72) on the circumference side and running in the circumferential direction of at least one driving disk (6, 8, 12, 14, 16, 17, 19, 21, 23, 25, 26, 29, 42, 44, 45, 51, 53; 70, 75a, 75b) and that the tension of the at least one belt (80) is adjusted by means of the device (93) to a value that is substantially the same in all instances independently of its length and of the diameter of the at least one looped-around drive disk (75a, 75b), the spring power being supplied by a gas spring (99) .

2. The textile machine according to Claim 1, **characterized in that** the longitudinal ribs (81) of the belt (7, 18, 24, 27, 43, 52; 80; 180; 280) are designed in a wedge shape (wedge-rib belt).

3. The textile machine according to Claim 1 or 2, **characterized in that** the belt (7, 18, 24, 27, 43, 52; 80) is designed flat on the side facing away from the longitudinal ribs (81).

4. The textile machine according to Claim 1 or 2, **characterized in that** the belt (7, 18, 24, 27, 43, 52; 80; 180; 280) has a profile on the side facing away from the longitudinal ribs (81).

5. The textile machine according to Claim 4, **characterized in that** the profile also has at least two longitudinal ribs.

6. The textile machine according to Claim 4, **characterized in that** the profile is designed as a toothed profile.

7. The textile machine according to one of the previous claims, **characterized in that** the at least one belt (7, 18, 24, 27, 43, 52; 80; 180; 280) loops around a driving disk designed as drive disk (6; 42) and loops around several driving disks designed as driven disks (8, 14, 16, 17, 21; 44, 45).

8. The textile machine according to one of the previous claims, **characterized in that** the at least one belt (80) loops around the tensioning roller (95) at a looping angle (α) in a range of approximately 160° - 200°.

9. The textile machine according to Claim 8, **characterized in that** the at least one belt (80) loops around the tensioning roller (95) at a looping angle (α) in a range of approximately 170° - 190°.

10. The textile machine according to Claim 8, **characterized in that** the at least one belt (80) loops around the tensioning roller (95) at a looping angle (α) of approximately 180°.

11. The textile machine according to one of the previous claims, **characterized in that** the tensioning roller (95) is supported in a linearly guided carriage (94) and that the carriage (94) is loaded by the spring power.

12. The textile machine according to one of the previous claims, **characterized in that** the gas spring (99) is designed to be damped in such a manner that oscillations of the belt (80) are damped or avoided during the operation of the machine.

13. The textile machine according to one of the previous claims, **characterized in that** the device (93) comprises a clamping screw (97) by means of which the tensioning roller (95) can be fixed in a place.

## Revendications

1. Machine textile, en particulier machine de préparation pour la filature, comportant un dispositif d'étirage (2) avec plusieurs disques de guidage (6, 8, 12, 14, 16, 17, 19, 21, 23, 25, 26, 29, 42, 44, 45, 51, 53 ; 70, 75a, 75b) pour l'entraînement d'éléments de machine, en particulier des rouleaux d'étirage (30, 31, 32), au moins une courroie sans fin (7, 18, 24, 27, 43, 52 ; 80 ; 180 ; 280) enroulée autour d'au moins deux disques de guidage respectifs, et un dispositif (93) de réglage de la tension de ladite au moins une courroie (80), dans laquelle le dispositif (93) comporte un rouleau tendeur (95) à support mobile autour duquel s'enroule ladite au moins une courroie (80) et constitué de manière à être mobile via la force appliquée par un ressort, **caractérisée en ce que** la courroie (7, 18, 24, 27, 43, 52 ; 80 ; 180 ; 280) comporte d'un côté au moins deux nervures longitudinales (81) qui s'engagent dans des cannelures longitudinales (72) circonférentielles et s'étendant en direction de la circonférence d'au moins un disque de guidage (6, 8, 12, 14, 16, 17, 19, 21, 23, 25, 26, 29, 42, 44, 45, 51, 53 ; 70, 75a, 75b), et **en ce que** la tension de ladite au moins une courroie (80) s'établit à une valeur dans tous les cas essentiellement constante à l'aide du dispositif (93), indépendamment de sa longueur et du diamètre dudit au moins un disque de guidage (75a, 75b) autour duquel elle est enroulée, sachant que ladite force de ressort est appliquée par un ressort à gaz (99).

2. Machine textile selon la revendication 1, **caractérisée en ce que** les nervures longitudinales (81) de la courroie (7, 18, 24, 27, 43, 52 ; 80 ; 180 ; 280) présentent une forme trapézoïdale (courroie trapézoïdale).

3. Machine textile selon la revendication 1 ou 2, **caractérisée en ce que** la courroie (7,18, 24, 27, 43, 52 ; 80) présente une surface plane du côté opposé aux nervures longitudinales (81).

4. Machine textile selon la revendication 1 ou 2, **caractérisée en ce que** la courroie (7, 18, 24, 27, 43, 52 ; 80 ; 180 ; 280) présente un profil du côté opposé aux nervures longitudinales (81).

5. Machine textile selon la revendication 4, **caractérisée en ce que** ledit profil comporte également au moins deux nervures longitudinales.

6. Machine textile selon la revendication 4, **caractérisée en ce que** le profil est un profil denté.

7. Machine textile selon l'une des revendications précédentes, **caractérisée en ce que** ladite au moins une courroie (7, 18, 24, 27, 43, 52 ; 80 ; 180 ; 280) s'enroule autour d'un disque de guidage constitué comme un disque d'entraînement (6 ; 42) et autour de plusieurs disques de guidage constitués comme des disques entraînés (8, 14, 16, 17, 21 ; 44, 45).

8. Machine textile selon l'une des revendications qui précèdent, **caractérisée en ce que** ladite au moins une courroie (80) est enroulée autour du rouleau tendeur (95) avec un angle d'enroulement (α) compris dans une plage d'environ 160° à 200°.

9. Machine textile selon la revendication 8, **caractérisée en ce que** ladite au moins une courroie (80) est enroulée autour du rouleau tendeur (95) avec un angle d'enroulement (α) compris dans une plage d'environ 170° à 190°.

10. Machine textile selon la revendication 8, **caractérisée en ce que** ladite au moins une courroie (80) est enroulée autour du rouleau tendeur (95) avec un angle d'enroulement (α) d'environ 180°.

11. Machine textile selon l'une des revendications qui précèdent, **caractérisée en ce que** le rouleau tendeur (95) est monté sur un chariot (94) à guidage linéaire et **en ce que** ledit chariot (94) est soumis à la force de ressort.

12. Machine textile selon l'une des revendications qui précèdent, **caractérisée en ce que** le ressort à gaz (99) est constitué de manière à amortir ou à empêcher les oscillations de la courroie (80) durant le fonctionnement de la machine.

13. Machine textile selon l'une des revendications qui précèdent, **caractérisée en ce que** le dispositif (93) comporte un dispositif de verrouillage (97) permettant de fixer la position du rouleau tendeur (95).
